# EUROPÄISCHE PATENTSCHRIFT

(11) **EP 3 371 425 B1**
(45) Veröffentlichungstag und Bekanntmachung des Hinweises auf die Patenterteilung: **10.07.2019**
(21) Anmeldenummer: 16766589.2
(22) Anmeldetag: 19.09.2016
(51) Int. Cl.: F01N 3/20

(54) **INJEKTORANORDNUNG ZUM ZUMESSEN EINES FLUIDS IN EINEN ABGASSTRANG**
INJECTOR ARRANGEMENT FOR FLUID SUPPLY INTO EXHAUST LINE
ARRANGEMENT D'UN INJECTEUR POUR ALIMENTATION D'UN FLUIDE AU LIGNE D'ECHAPPEMENT

(30) Priorität: 04.11.2015 DE 102015221620
(43) Veröffentlichungstag der Anmeldung: 12.09.2018
(73) Patentinhaber: Robert Bosch GmbH, 70442 Stuttgart (DE)
(72) Erfinder: THOEMMES, Franz, 74321 Bietigheim-Bissingen (DE)
(86) Internationale Anmeldenummer: PCT/EP2016/072185
(87) Internationale Veröffentlichungsnummer: WO 2017/076543

(56) Entgegenhaltungen:
- EP-A1- 2 432 976
- WO-A1-2014/048610
- WO-A1-2014/154380
- WO-A1-2015/082094
- US-A1- 2014 299 202

## Beschreibung

### Stand der Technik

Die vorliegende Erfindung betrifft eine Injektoranordnung zum Zumessen eines Fluids, insbesondere eines Reduktionsmittels, in einen Abgasstrang einer Brennkraftmaschine sowie eine Brennkraftmaschine mit einer erfindungsgemäßen Injektoranordnung.

Zur Reduzierung von Abgasemissionen bei Brennkraftmaschinen werden Reduktionsmittel, z.B. Harnstoff, in einen Abgasstrang der Brennkraftmaschine eingespritzt. Dies erfolgt mittels eines Injektors. Da im Abgasstrang üblicherweise sehr hohe Temperaturen herrschen, sind erhöhte Anforderungen an derartige Harnstoffinjektoren zu stellen. Ein derartiger Injektor ist beispielsweise aus der DE 102013205309 A1, der WO 2014/048610 A1, der WO 2014/154380 A1, der WO 2015/082094 A1, der US 2014/299202 A1 oder der EP 2 432 976 A1 bekannt. Zur Reduzierung der Temperaturen des Injektors ist hierbei ein Kühlkreislauf vorgesehen, welcher um den Injektor herumgeführt ist. Ein elektrischer Anschluss des Injektors wird durch das Gehäuse durch eine Tülle aus einem Elastomer geführt. Bei derartigen Harnstoffinjektoren ergibt sich jedoch ein weiteres Problem, welches sich durch das Auftreten von hoch reaktiven Dämpfen, z.B. Ammoniak, ergeben kann, die im Abgastrakt oder in der Zuleitung auftreten können und insbesondere Elastomere und Kunststoffe angreifen. Derartige Dämpfe können eine Lebensdauer der Injektoranordnung signifikant reduzieren.

### Offenbarung der Erfindung

Die erfindungsgemäße Injektoranordnung zum Zumessen eines Fluids, insbesondere eines Reduktionsmittels, in einen Abgasstrang einer Brennkraftmaschine mit den Merkmalen des Anspruchs 1 weist demgegenüber den Vorteil auf, dass hohe Temperaturen und möglicherweise austretende hoch reaktive Dämpfe der Injektoranordnung keinen Schaden zufügen können. Dies wird erfindungsgemäß dadurch erreicht, dass die Injektoranordnung eine separate, im Gehäuse des Injektors angeordnete elektrische Anschlussanordnung aufweist, welche von einem elektrischen Anschluss des Injektors bis zu einem Austritt aus dem Gehäuse des Injektors führt. Die elektrische Anschlussanordnung umfasst einen Leitungsabschnitt und eine Steckeraufnahme, welche in einer im Gehäuse vorgesehenen Öffnung in abgedichteter Weise angeordnet ist. Somit kann erfindungsgemäß die elektrische Anschlussanordnung hinsichtlich möglicherweise auftretender aggressiver Dämpfe optimiert werden, insbesondere ohne Kunststoffe und/oder Elastomere oder andere Materialien, welche durch die Dämpfe angegriffen werden könnten. Besonders bevorzugt ist die Steckeraufnahme aus einem metallischen Werkstoff und eine Isolierung des Leitungsabschnitts im Gehäuse ist durch einen gegenüber den Dämpfen und Spritzwasser resistenten Kunststoff ausgeführt. Weiterhin kann durch die erfindungsgemäße Lösung auch eine aufwändige Montage eines Kabelschwanzes, welcher im Stand der Technik bisher in das Gehäuse eingeführt wird und einzeln an den elektrischen Anschlüssen angeschlossen werden muss, verzichtet werden. Auch kann auf eine Tülle zur Abdichtung des Kabels an der Öffnung im Gehäuse verzichtet werden. Eine elektrische Verbindung des Injektors kann dann einfach durch Einstecken eines Steckers in die Steckeraufnahme realisiert werden. Dadurch wird die Steckeraufnahme zusätzlich fixiert und geführt und kann sich auch beispielsweise bei Auftreten von Vibrationen oder Schüttelbewegungen und hohen thermischen Belastungen nicht lösen. Die Kontaktierung zwischen Stecker und Steckeraufnahme erfolgt somit nicht mehr im Inneren des Gehäuses, sondern am Gehäuserand bzw. außerhalb des Gehäuses. Dadurch sind die Kontakte nicht den möglicherweise im Gehäuse auftretenden, reaktionsfreudigen Dämpfen ausgesetzt.

Die Unteransprüche zeigen bevorzugte Weiterbildungen der Erfindung.

Vorzugsweise umfasst das Gehäuse der Injektoranordnung einen Hauptkörper und einen Deckel. Im Deckel ist dabei bevorzugt die Öffnung der elektrischen Anschlussanordnung vorgesehen. Weiter bevorzugt ist im Deckel auch eine Öffnung für einen Fluidanschluss zum Zuführen des Fluids zum Injektor vorgesehen.

Besonders bevorzugt weist das Gehäuse an der Öffnung der elektrischen Anschlussanordnung einen hülsenartigen Hals auf. Insbesondere ist die Steckeraufnahme der elektrischen Anschlussanordnung dabei am hülsenartigen Hals mittels eines O-Rings abgedichtet. Hierdurch wird eine Montage der Steckeraufnahme im Gehäuse vereinfacht, da der hülsenartige Hals eine Führung der Steckeraufnahme bereitstellt. Ferner kann auch auf einfache Weise eine sichere Abdichtung, beispielsweise mittels eines O-Rings, erfolgen.

Vorzugsweise ist die Steckeraufnahme zumindest teilweise in den hülsenartigen Hals des Gehäuses eingeführt. Weiter bevorzugt ist die Steckeraufnahme vollständig im hülsenartigen Hals eingeführt.

Alternativ ist bevorzugt eine Hülse in der Öffnung für die elektrische Anschlussanordnung angeordnet.

Erfindungsgemäß umfasst die elektrische Anschlussanordnung eine Halteeinrichtung, wie z.B. einen Clip, welcher den Leitungsabschnitt der elektrischen Anschlussanordnung im Inneren des Gehäuses fixiert. Die Fixierung des Leitungsabschnitts erfolgt vorzugsweise am Fluidanschluss der Injektoranordnung. Die Halteeinrichtung ist erfindungsgemäß ein Clip, insbesondere aus einem Metallmaterial. Dadurch wird eine schnelle und einfache Montage sichergestellt.

Zur elektrischen Isolierung ist der Leitungsabschnitt der elektrischen Anschlussanordnung vorzugsweise mittels eines widerstandsfähigen Kunststoffes ummantelt. Der Kunststoff ist insbesondere gegenüber Ammoniak widerstandsfähig.

Gemäß einer bevorzugten Ausführungsform der Erfindung ist die Steckeraufnahme der elektrischen Anschlussanordnung am Gehäuse mittels einer Crimpverbindung verbunden. Hierdurch kann auf einfache und kostengünstige Weise eine sichere und insbesondere auch fluiddichte Abdichtung zwischen der Steckeraufnahme und dem Gehäuse realisiert werden. Alternativ ist die Steckeraufnahme mittels eines Clips am Gehäuse fixiert.

Für eine sichere elektrische Kontaktierung ist vorzugsweise der Leitungsabschnitt am elektrischen Anschluss des Injektors mittels einer Schweißverbindung fixiert.

Weiterhin betrifft die vorliegende Erfindung eine Brennkraftmaschine, umfassend eine erfindungsgemäße Injektoranordnung, welche an einem Abgasstrang der Brennkraftmaschine angeordnet ist. Die Injektoranordnung ist insbesondere eine Anordnung zum Einspritzen eines Reduktionsmittels, insbesondere einer Harnstoff-Wasser-Lösung.

### Zeichnung

Nachfolgend wird ein bevorzugtes Ausführungsbeispiele der Erfindung unter Bezugnahme auf die begleitende Zeichnung im Detail beschrieben. In der Zeichnung ist:
- Figur 1: eine schematische Schnittansicht einer Injektoranordnung gemäß einem Ausführungsbeispiel der Erfindung, und
- Figur 2: eine schematische Querschnittsansicht eines Teils der Injektoranordnung von Figur 1.

### Bevorzugte Ausführungsformen der Erfindung

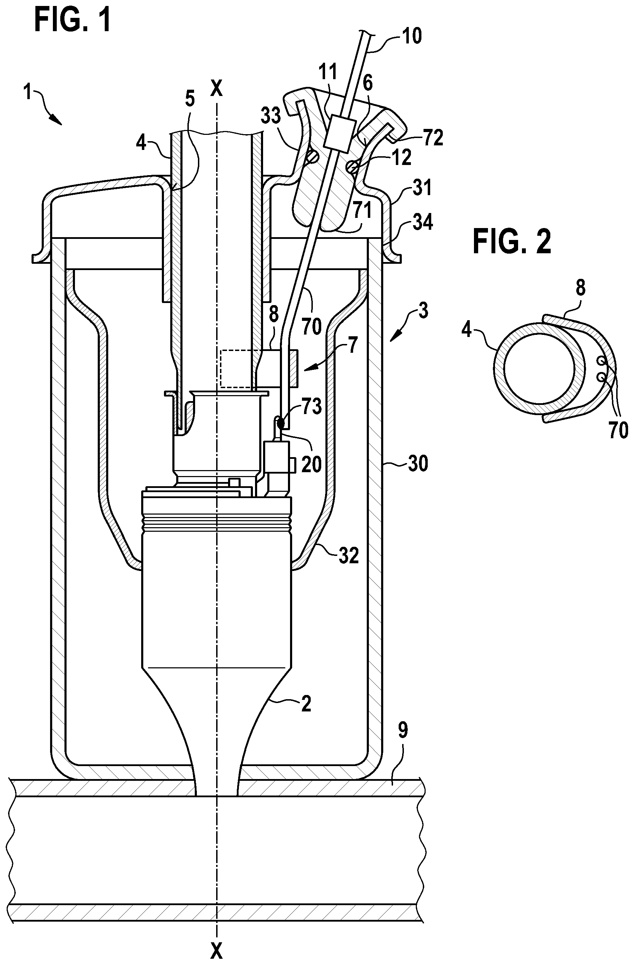

Nachfolgend wird unter Bezugnahme auf die Figuren 1 und 2 eine Injektoranordnung 1 gemäß einem bevorzugten Ausführungsbeispiel der Erfindung im Detail beschrieben.

Wie aus Figur 1 ersichtlich ist, umfasst die Injektoranordnung 1 einen Injektor 2, welcher in einem Gehäuse 3 angeordnet ist. Der Injektor 2 ist eingerichtet, um ein Fluid, insbesondere ein Reduktionsmittel, in einen Abgasstrang 9 einer Brennkraftmaschine zuzumessen. Der Injektor 2 ist vorzugsweise ein Harnstoff-Injektor zum Zumessen eines Harnstoff-Wasser-Gemisches.

Das Gehäuse 3 ist aus einem metallischen Material, beispielsweise Edelstahl, hergestellt und in diesem Ausführungsbeispiel zweiteilig vorgesehen. Das Gehäuse 3 umfasst dabei einen im Wesentlichen topfförmigen Hauptkörper 30 und einen den topfförmigen Hauptkörper 30 verschließenden Deckel 31. Im Gehäuse 3 ist ferner noch ein Innengehäuse 32 angeordnet, um den Injektor 2 abzustützen und die Möglichkeit vorzusehen, ein Kühlmittel am Injektor vorbei zu leiten.

Der Deckel 31 ist aus dem gleichen Material wie der Hauptkörper 30 vorgesehen und ist mittels einer Schweißverbindung 34 am Hauptkörper 30 fixiert.

Im Deckel 31 ist eine erste Öffnung 5 und eine zweite Öffnung 6 vorgesehen. Die erste Öffnung 5 dient zur Durchführung eines Fluidanschlusses 4 durch den Deckel 31, um das einzuspritzende Fluid zum Injektor 2 zuzuführen. Der Fluidanschluss 4 ist dabei in Axialrichtung X-X des Injektors 2 ausgerichtet und mit diesem beispielsweise über eine Schweißverbindung mit dem Deckel verbunden.

Die Injektoranordnung 1 umfasst ferner eine elektrische Anschlussanordnung 7. Die elektrische Anschlussanordnung 7 dient zur Verbindung des Injektors mit einer zu einem nicht gezeigten Steuergerät führenden Leitung 10. Die elektrische Anschlussanordnung 7 ist dabei vollständig im Gehäuse 3 angeordnet. Die elektrische Anschlussanordnung 7 umfasst einen Leitungsabschnitt 70 und eine Steckeraufnahme 71. Das freie Ende des Leitungsabschnitts 70 ist an einem elektrischen Anschluss 20 des Injektors 2 mittels einer Schweißverbindung 73 fixiert. In diesem Ausführungsbeispiel sind zwei Leitungsabschnitte 70 (s. Figur 2) zum Injektor 2 geführt.

Zur Stabilisierung und Führung sind die Leitungsabschnitte 70 mittels einer Halteeinrichtung 8 in Form eines Kunststoffclips am Fluidanschluss 4 befestigt. Dies ist im Detail aus Figur 2 ersichtlich.

Die Steckeraufnahme 71 ist, wie aus Figur 1 ersichtlich ist, teilweise in einem am Deckel 31 gebildeten, hülsenförmigen Hals 33 angeordnet. Die Steckeraufnahme 71 weist dabei einen Kragen auf, welcher umgebogen und durch eine Crimpverbindung 72 am hülsenförmigen Hals 33 fixiert ist. Dadurch kann eine einfache und sichere Fixierung der Steckeraufnahme 71 am Deckel 31 erfolgen. Zusätzlich ist am äußeren Umfang der Steckeraufnahme 71 noch ein O-Ring 12 vorgesehen, um eine redundante Abdichtung des Inneren des Gehäuses gegenüber der Außenseite des Gehäuses 3 zu ermöglichen.

Somit kann erfindungsgemäß die elektrische Anschlussanordnung 7 zuerst einfach und problemlos am Injektor 2 fixiert werden und nach der Montage des Injektors samt elektrischer Anschlussanordnung 7 im Gehäuse 3 und der Fixierung der Steckeraufnahme 71 am Deckel 31 der Stecker 11 der Leitung 10 einfach in die Steckeraufnahme 71 eingesteckt werden. Da die Verbindung zwischen dem Leitungsabschnitt 70 und dem elektrischen Anschluss 20 außerhalb des Gehäuses 3 möglich ist, kann eine Automatisierung der Herstellung der Schweißverbindung 73 ermöglicht werden. Weiterhin muss auch keine Tülle oder dergleichen, wie im Stand der Technik bei der Durchführung der elektrischen Leitung 10 durch das Gehäuse vorgesehen werden. Am Übergang zwischen dem Gehäuse und der Außenseite des Gehäuses ist erfindungsgemäß die Steckeraufnahme 71 vorgesehen. Im eingesteckten Zustand des Steckers in der Steckeraufnahme 71 wird zusätzlich noch eine Fixierung der Steckeraufnahme am Gehäuse 3 ermöglicht, so dass auch bei einer Schüttelbelastung oder einer hohen thermischen Belastung kein Lösen der Steckeraufnahme 71 vom Gehäuse möglich ist.

Alternativ zur Verstemmung kann auch ein Befestigungsclip zur Fixierung des Steckers 11 verwendet werden.

## Patentansprüche

1. Injektoranordnung zum Zumessen eines Fluids, insbesondere eines Reduktionsmittels, in einen Abgasstrang (9) einer Brennkraftmaschine, umfassend
- einen Injektor (2),
- ein den Injektor (2) umgebendes Gehäuse (3),
- eine erste Öffnung (5), welche am Gehäuse (3) vorgesehen ist, um einen Zugang für einen Fluidanschluss (4) zum Zuführen des Fluids zum Injektor (2) zu ermöglichen,
- eine zweite Öffnung (6), welche am Gehäuse (3) vorgesehen ist, und
- eine elektrische Anschlussanordnung (7), welche im Gehäuse (3) angeordnet ist und von einem elektrischen Anschluss (20) des Injektors bis zur zweiten Öffnung (6) geführt ist,
- wobei die elektrische Anschlussanordnung (7) einen Leitungsabschnitt (70) und eine Steckeraufnahme (71) umfasst, und
- wobei die Steckeraufnahme (71) in abgedichteter Weise an der zweiten Öffnung (6) im Gehäuse (3) angeordnet ist,
**dadurch gekennzeichnet, dass** die Injektoranordnung eine Halteeinrichtung (8) umfasst, welche den Leitungsabschnitt (70) im Inneren des Gehäuses (3) fixiert,
wobei der Leitungsabschnitt (70) zur Stabilisierung und Führung mittels der Halteeinrichtung (8) in Form eines Kunststoffclips am Fluidanschluss (4) befestigt ist.

2. Anordnung nach Anspruch 1, **dadurch gekennzeichnet, dass** das Gehäuse (3) einen Hauptkörper (30) und einen Deckel (31) umfasst.

3. Anordnung nach Anspruch 2, **dadurch gekennzeichnet, dass** die zweite Öffnung (6) im Deckel (31) des Gehäuses (3) vorgesehen ist.

4. Anordnung nach einem der vorhergehenden Ansprüche, **dadurch gekennzeichnet, dass** das Gehäuse (3) an der zweiten Öffnung (6) einen hülsenartigen Hals (33) aufweist.

5. Anordnung nach Anspruch 4, **dadurch gekennzeichnet, dass** die Steckeraufnahme (71) zumindest teilweise in den hülsenartigen Hals (33) eingeführt ist.

6. Anordnung nach einem der Ansprüche 1 bis 3, **dadurch gekennzeichnet, dass** eine Hülse an der zweiten Öffnung (6) vorgesehen ist, und die Steckeraufnahme (71) vollständig in der Hülse angeordnet ist.

7. Anordnung nach einem der vorhergehenden Ansprüche, **dadurch gekennzeichnet, dass** der Leitungsabschnitt (70) mittels eines widerstandsfähigen Kunststoffs isoliert ist oder mittels einer isolierenden Hülse isoliert ist.

8. Anordnung nach einem der vorhergehenden Ansprüche, **dadurch gekennzeichnet, dass** die Steckeraufnahme (71) am Gehäuse (3) mittels einer Crimpverbindung (72) verbunden ist.

9. Brennkraftmaschine, umfassend eine Injektoranordnung (1) gemäß einem der vorhergehenden Ansprüche, welche an einem Abgasstrang (9) der Brennkraftmaschine angeordnet ist.

## Claims

1. Injector assembly for metering a fluid, in particular a reductant, into an exhaust line (9) of an internal combustion engine, comprising
- an injector (2),
- a housing (3), which surrounds the injector (2),
- a first opening (5), which is provided on the housing (3) in order to allow access for a fluid connection (4) for supplying the fluid to the injector (2),
- a second opening (6), which is provided on the housing (3), and
- an electric terminal assembly (7), which is arranged in the housing (3) and which is passed from an electric terminal (20) of the injector to the second opening (6),
- wherein the electric terminal assembly (7) comprises a line portion (70) and a plug socket (71), and
- wherein the plug socket (71) is arranged in the housing (3) in a sealed manner on the second opening (6),
**characterized in that** the injector assembly comprises a holding device (8), which fixes the line portion (70) in the interior of the housing (3), wherein, for stabilization and guidance, the line portion (70) is fastened to the fluid connection (4) by means of the holding device (8) in the form of a plastic clip.

2. Assembly according to Claim 1, **characterized in that** the housing (3) comprises a main body (30) and a cover (31).

3. Assembly according to Claim 2, **characterized in that** the second opening (6) is provided in the cover (31) of the housing (3).

4. Assembly according to one of the preceding claims, **characterized in that** the housing (3) has a sleeve-type neck (33) at the second opening (6).

5. Assembly according to Claim 4, **characterized in that** the plug socket (71) is inserted at least partially into the sleeve-type neck (33).

6. Assembly according to one of Claims 1 to 3, **characterized in that** a sleeve is provided on the second opening (6), and the plug socket (71) is arranged completely in the sleeve.

7. Assembly according to one of the preceding claims, **characterized in that** the line portion (70) is insulated by means of a resistant plastic or is insulated by means of an insulating sleeve.

8. Assembly according to one of the preceding claims, **characterized in that** the plug socket (71) is connected to the housing (3) by means of a crimped joint (72).

9. Internal combustion engine comprising an injector assembly (1) according to one of the preceding claims, which is arranged on an exhaust line (9) of the internal combustion engine.

## Revendications

1. Agencement d'injecteur pour le dosage d'un fluide, en particulier d'un agent réducteur, dans une ligne d'échappement (9) d'un moteur à combustion interne, comprenant :
- un injecteur (2),
- un boîtier (3) entourant l'injecteur (2),
- une première ouverture (5) qui est prévue au niveau du boîtier (3), pour permettre un accès pour un raccord de fluide (4) pour acheminer du fluide à l'injecteur (2),
- une deuxième ouverture (6) qui est prévue au niveau du boîtier (3), et
- un agencement de raccord électrique (7) qui est disposé dans le boîtier (3) et qui est guidé par un raccord électrique (20) de l'injecteur jusqu'à la deuxième ouverture (6),
- l'agencement de raccord électrique (7) comprenant une portion de conduite (70) et un logement de fiche (71), et
- le logement de fiche (71) étant disposé de manière étanchéifiée au niveau de la deuxième ouverture (6) dans le boîtier (3),
**caractérisé en ce que** l'agencement d'injecteur comprend un dispositif de retenue (8) qui fixe la portion de conduite (70) à l'intérieur du boîtier (3), la portion de conduite (70) étant fixée au raccord de fluide (4) pour la stabilisation et le guidage au moyen du dispositif de retenue (8) sous la forme d'un clip en plastique.

2. Agencement selon la revendication 1, **caractérisé en ce que** le boîtier (3) comprend un corps principal (30) et un couvercle (31).

3. Agencement selon la revendication 2, **caractérisé en ce que** la deuxième ouverture (6) est prévue dans le couvercle (31) du boîtier (3).

4. Agencement selon l'une quelconque des revendications précédentes, **caractérisé en ce que** le boîtier (3) présente, au niveau de la deuxième ouverture (6), un col en forme de douille (33).

5. Agencement selon la revendication 4, **caractérisé en ce que** le logement de fiche (71) est introduit au moins en partie dans le col en forme de douille (33) .

6. Agencement selon l'une quelconque des revendications 1 à 3, **caractérisé en ce qu'**une douille est prévue au niveau de la deuxième ouverture (6), et le logement de fiche (71) est disposé complètement à l'intérieur de la douille.

7. Agencement selon l'une quelconque des revendications précédentes, **caractérisé en ce que** la portion de conduite (70) est isolée au moyen d'un plastique résistant ou au moyen d'une douille isolante.

8. Agencement selon l'une quelconque des revendications précédentes, **caractérisé en ce que** le logement de fiche (71) est connecté au boîtier (3) au moyen d'une connexion sertie (72).

9. Moteur à combustion interne, comprenant un agencement d'injecteur (1) selon l'une quelconque des revendications précédentes, qui est disposé au niveau d'une ligne d'échappement (9) du moteur à combustion interne.
